# EUROPEAN PATENT SPECIFICATION

(11) **EP 1 020 413 B1**
(45) Date of publication and mention of the grant of the patent: **17.10.2001**
(21) Application number: 99126222.1
(22) Date of filing: 30.12.1999
(51) Int. Cl.: C03C 3/06, C03C 4/00, C03C 13/04, C03C 23/00, C03C 25/62, C03B 32/00, C03B 37/14, C03B 37/15

(54) **Silica glass article and manufacturing method therefor**
Quarzglasgegenstand und dessen Herstellung
Article en verre de silice et son procédé de fabrication

(30) Priority: 12.01.1999 JP 558199
(43) Date of publication of application: 19.07.2000
(73) Proprietor: SUMITOMO ELECTRIC INDUSTRIES, LTD., Osaka-shi, Osaka 541 (JP)
(72) Inventor: Urano, Akira, Yokohama Works of Sumitomo Electric, Sakae-ku, Yokohama-shi, Kanagawa (JP); Mogi, Masaharu, Yokohama Work of Sumitomo Electric, Sakae-ku, Yokohama-shi, Kanagawa (JP); Shishido, Yasuhiko, Yokohama Work of Sumitomo El., Sakae-ku, Yokohama-shi, Kanagawa (JP); Ohga, Yuichi, Yokohama Works of Sumitomo Electric, Sakae-ku, Yokohama-shi, Kanagawa (JP)
(74) Representative: Grünecker, Kinkeldey, Stockmair & Schwanhäusser Anwaltssozietät

(56) References cited:
- EP-A- 0 879 799

## Description

### FIELD OF THE INVENTION

The present invention relates to a silica glass article and a manufacturing method therefor. More particularly, the invention relates to a silica glass article capable of transmitting light having a wavelength of 160 nm to 300 nm included in the ultraviolet region, exhibiting an excellent initial transmission characteristic and capable of preventing an increase in a transmission loss occurring due to irradiation with ultraviolet rays, and relates to a manufacturing method therefor. The industrial utility value of ultraviolet rays having a wavelength of 160 nm to 300 nm has been increased in industrial field of photolithography, a laser process, sterilization, disinfection and the like. A silica glass article according to the present invention is free from substantial deterioration caused by ultraviolet ray irradiation and can be advantageously be used in such fields.

### BACKGROUND OF THE INVENTION

Silica glass articles have been used as light transmitting mediums, such as optical fibers and various optical elements. In particular, use of the optical fiber having advantage of light weight, small diameter and no induction, has recently been widened in various industrial fields including communication, image transmission and energy transmission. As one of the fields, use of the optical fiber to transmit ultraviolet rays has been expected in the medical and precise processing fields. However, when glass is irradiated with ultraviolet rays, it deteriorates and its transmission loss increases. That is, there arises a problem in that deterioration takes place because of ultraviolet ray irradiation. Since the transmission loss of a silica optical fiber having the silica glass as the core thereof is smaller than that of an optical fiber made of multicomponent type glass, the silica optical fiber is a preferred element to transmit ultraviolet rays. However, the problem of the deterioration which takes place because of ultraviolet ray irradiation remain unsolved.

There may be a case where a light transmission in silica glass is superior to that in air if the wavelength is not longer than 200 nm. The reason for this lies in that dissociation of an oxygen gas takes place because of ultraviolet ray irradiation in air. Therefore, a high transmission can be expected if the deterioration which takes place because of ultraviolet ray irradiation can be reduced in the wavelength region not longer than 200 nm.

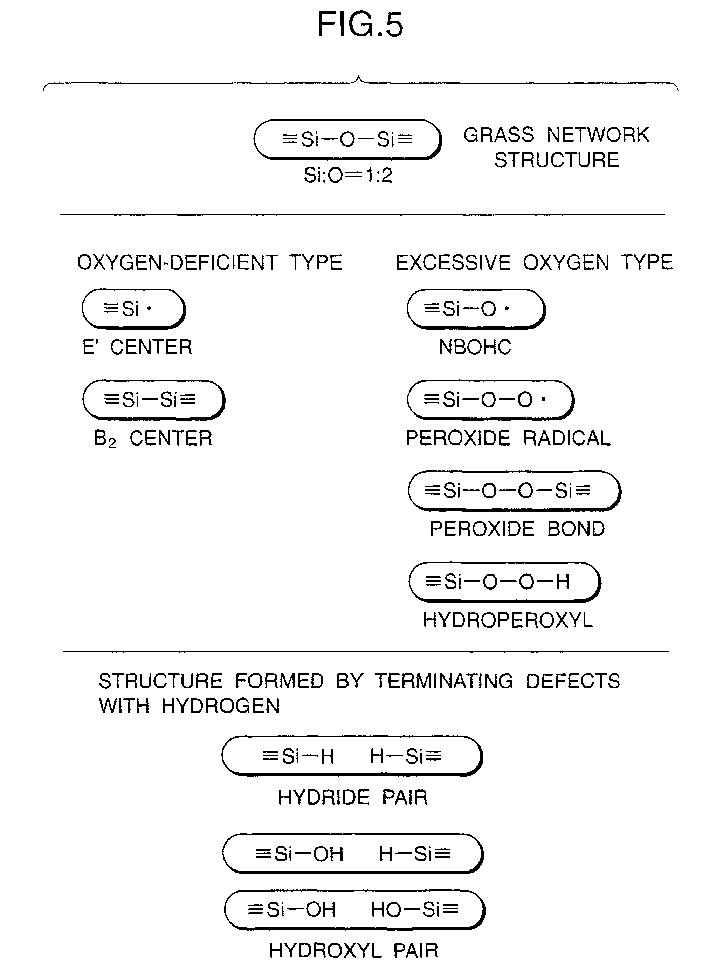

It has been considered that the deterioration which takes place because of ultraviolet ray irradiation is mainly attributed to a defect in glass. In the present invention, the "defect in glass" means a broken portion of the glass network structure or a portion of the glass network structure that is stretched due to a distortion of the glass and is apt to break easily. Fig. 5 shows a plurality of examples of reported defects in glass of silica glass. As representative defects in glass, defects related to E' center (≡Si·) and oxygen-deficient type defects (≡Si-Si≡) are exemplified. The above-mentioned defects in glass absorb ultraviolet rays at wavelengths of 163 nm, 215 nm and 245 nm. It has been considered that the foregoing defects in glass occur in a glass synthesized in an atmosphere somewhat lacking in oxygen, or in a glass having a low concentration of OH groups.

Recently there have been disclosed several processes in which hydrogen molecules are added to silica glass in an attempt to improve ultraviolet ray resistance. For example, JP-A-3-23236 (document 1) proposes silica glass in which OH groups are contained in an amount of 100 ppm or higher so that substantially no oxygen defect exists and hydrogen gas is incorporated, so as to have improved ultraviolet ray resistance. JP-A-5-32432 (document 2) proposes a process in which deterioration due to ultraviolet ray irradiation is prevented by controlling the concentration of hydrogen in silica glass to 1.5 x 10¹⁷ molecules/cm³ or higher. Moreover, the concentration of chlorine is made to be 100 ppm or lower to reduce hydrogen consumption in glass when ultraviolet ray irradiation is performed so as to maintain ultraviolet ray resistance. JP-A-6-16449 (document 3) proposes silica glass which has improved ultraviolet ray resistance by designing to contain OH group in an amount of 100 ppm or lower and chlorine in an amount of 200 ppm or lower, and to have a hydrogen concentration of 10¹⁶ molecules/cm³ or lower, a refractive index fluctuation of 5 x 10⁻⁶ or lower and a birefringence of 5 nm/cm or lower. JP-A-8-290935 (document 4) proposes silica glass in which the amount of OH groups is 50 ppm or lower and hydrogen is contained by at least 10¹⁸ molecules/cm³ and which is free from optical damage if the silica glass is irradiated with 10⁷ pulses of KrF laser at an output of 350 mJ/cm². U.S. Patent No. 5,679,125 (document 5) proposes silica glass which has improved ultraviolet ray resistance because hydrogen molecules are added to silica glass to which fluorine has been added.

In addition, JP-A-7-300325 (document 6) proposes a process which is able to improve ultraviolet ray resistance such that hydrogen molecule-contained silica glass is irradiated with γ-rays so as to make the concentration of hydrogen in the irradiated silica glass to be 5 x 10¹⁶ molecules/cm³ or higher so that the ultraviolet ray resistance is improved. JP-A-9-124337 (document 7) proposes a process with which the ultraviolet ray resistance is improved by irradiating glass containing hydrogen molecules at a concentration from 2 x 10¹⁷ molecules/cm³ to 5 x 10¹⁹ molecules/cm³ with ultraviolet rays of 150 nm to 300 nm for 20 hours or longer.

The hydrogen treatment employed in the processes disclosed in documents 1 to 7 is such that the defects in glass caused by ultraviolet ray irradiation and the hydrogen molecules dispersed in the glass by the hydrogen treatment are bonded to each other so that increase in absorption of light is restrained. The restraining period, however, is limited to a period of time in which hydrogen molecules remain the glass. Since the processes disclosed in documents 1 to 7 are mainly adapted to a bulk-form glass member, the volume of the glass member is sufficiently large with respect to the velocity at which hydrogen in the glass is dispersed. It is considered that hydrogen molecules remain in the member for a long time and thus ultraviolet ray resistance can be maintained.

If the size of the silica glass article is small with respect to the diffusion velocity of hydrogen in the glass, hydrogen molecules introduced into the silica glass is undesirably discharged from the silica glass article to the outside in a relatively short period of time. For example, if the glass article is an optical fiber and the outer diameter of the fiber is 125 µm, hydrogen molecules are discharged in 8 to 9 weeks. If the outer diameter is 200 µm, hydrogen molecules are discharged in about 24 weeks.

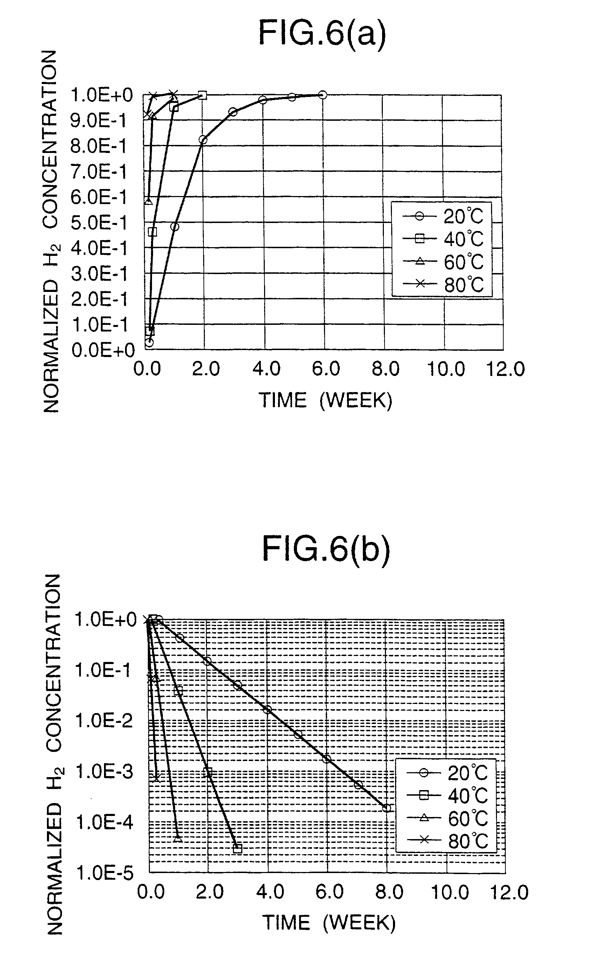

Fig. 6(a) shows calculated change in the concentration of hydrogen at the center of a fiber having an outer diameter of 125 µm in the course of hydrogen doping at from 20°C to 80°C. The change is expressed such that the initial concentration is indicated as 0 and a saturated concentration is indicated as 1. Similarly, Fig. 6(b) shows calculated change in the concentration of hydrogen in the course when hydrogen dissipates from the fiber, in the same manner as in Fig. 6(a). The environment around the glass fiber is the atmosphere and the partial pressure of hydrogen is assumed to be zero.

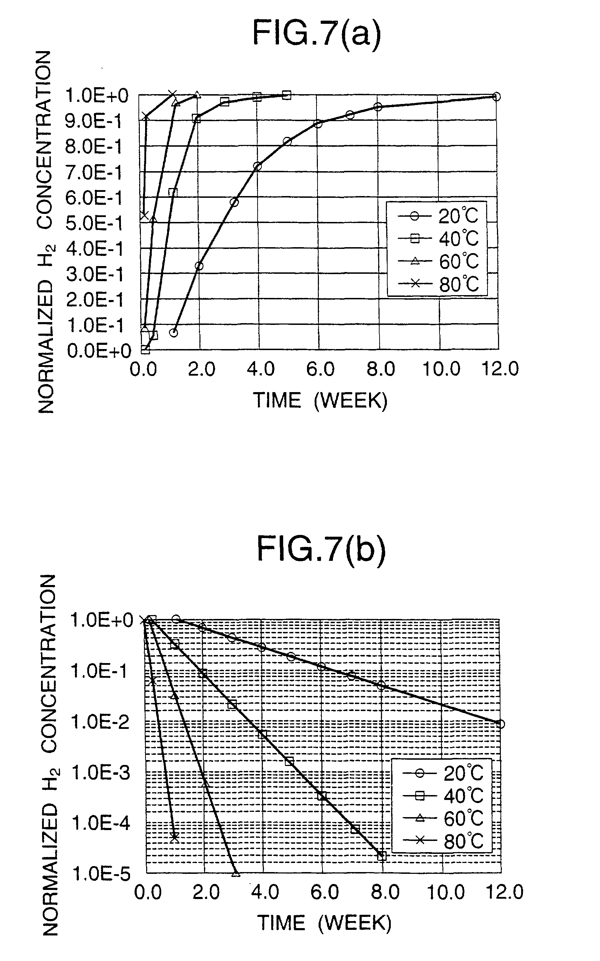

In Figs. 7(a) and 7(b), calculated changes in hydrogen concentration in a glass fiber having an outer diameter of 200 µm are shown in the same manner as in Figs. 6(a) and 6(b).

With regard to such dissipation of hydrogen, similar results were seen with the fibers manufactured by the conventional techniques disclosed in documents 1 to 7. That is, when the technique is applied to an optical fiber, hydrogen is undesirably dispersed to the outside in a short time. Thus, there arises a problem that the ultraviolet ray resistance cannot be maintained. As shown in Fig. 6, hydrogen molecules in an optical fiber (having a clad outer diameter of 125 µm) allowed to stand at the room temperature are usually gradually discharged to the outside thereof. The concentration is lowered to about 1/10000 in about two months. Hydrogen molecules are substantially completely discharged in about three months. That is, the restraining effect is effective in only about three months after the hydrogen treatment has been performed. Therefore, increase in the light absorption cannot be prevented for a long time.

### SUMMARY OF THE INVENTION

In view of the foregoing, an object of the present invention is to provide a silica glass article serving as an optical fiber or a bundle fiber for transmitting ultraviolet rays, exhibiting excellent initial ultraviolet ray transmission characteristics and free from increase in the transmission loss even if the silica glass article is used for a long time in an environment in which the article is subjected to ultraviolet ray irradiation, and to provide a manufacturing method therefor. Another object of the present invention is to provide a silica article which is free from deterioration even if the silica article is irradiated with ultraviolet rays having a wavelength of not longer than 200 nm and which exhibits transmission higher than that in the air, and to provide a manufacturing method therefor.

When the present invention is applied to an optical fiber, an object of the present invention is to provide a silica glass article in which not only the glass fiber but also its coating are free from deterioration caused by ultraviolet rays, and to provide a manufacturing method therefor.

Another object of the present invention is to provide a silica glass article which is satisfactorily practical from a viewpoint of manufacturing facilities and the manufacturing cost and which exhibits an excellent resistance against deterioration caused by ultraviolet ray irradiation, and to provide a manufacturing method therefor.

Other objects and effects of the present invention will become apparent from the following description.

The above-described objectives of the present invention have been achieved by providing the following methods 1) to 8).
1) A method of manufacturing a silica glass article comprising:
   (1) placing a starting silica glass article in an atmosphere containing hydrogen molecules to introduce hydrogen molecules into said starting silica glass article at a concentration of not lower than 1 x 10¹⁶ molecules/cm³;
   (2) taking said hydrogen-introduced silica glass article out of the atmosphere containing hydrogen molecules; and
   (3) irradiating said silica glass article with at least 10⁶ pulses of an excimer laser beam having an energy of 10 mJ per pulse within a period in which the concentration of hydrogen molecules remaining in said silica glass article is not lower than 1 x 10¹⁶ molecules/cm³, to obtain a processed silica glass article which causes substantially no increase in its light absorption in an ultraviolet region.
2) The method of manufacturing a silica glass article according to the above-mentioned item 1), wherein said step (1) is performed under conditions that the partial pressure of hydrogen is 0.5 atm to 10 atm and the temperature is not lower than the room temperature.
3) The method of manufacturing a silica glass article according to the above-mentioned item 1) or 2), wherein the excimer laser beams have a wavelength of 248 nm, an energy of 100 mJ per pulse and a number of the pulses of not more than 10⁷.
4) The method of manufacturing a silica glass article according to any one of the above-mentioned items 1) to 3), further comprising, after said step (3),
(4) reducing the concentration of the hydrogen molecules remaining in said silica glass article to lower than 1 x 10¹⁶ molecules/cm³.
5) The method of manufacturing a silica glass article according to the above-mentioned item 4), wherein said step (4) is performed by heating said silica glass article at a temperature of from room temperature to 80°C.
6) The method of manufacturing a silica glass article according to any one of the above-mentioned items 1) to 5),
   wherein said starting silica glass article is an optical fiber having a coating, and
   wherein said step (1) is performed under the partial pressure of hydrogen of from 0.5 atm to 10 atm and at a temperature of from room temperature to an uppermost heat-resisting temperature of the coating of said optical fiber.
7) The method of manufacturing a silica glass article according to any one of the above-mentioned items 1) to 6),
   wherein said starting silica glass article is an optical fiber, and
   wherein said step (1) is performed under the partial pressure of hydrogen of 0.5 atm to 10 atm and at a temperature of from 80°C to 200°C.
8) The method of manufacturing a silica glass article according to any one of the above-mentioned items 1) to 7), wherein said starting silica glass article is a bundle fiber formed by bundling a plurality of optical fibers or is an optical fiber, before wound, for constituting a bundle fiber.
   Furthermore, the present invention also relates to the following silica glass articles of items 9) and 10) and optical fibers of items 11) to 15).
9) A silica glass article which is processed by a process comprising:
   (1) placing a starting silica glass article in an atmosphere containing hydrogen molecules to introduce hydrogen molecules into said starting silica glass article at a concentration of not lower than 1 x 10¹⁶ molecules/cm³;
   (2) taking said hydrogen-introduced silica glass article out of the atmosphere containing hydrogen molecules; and
   (3) irradiating said silica glass article with at least 10⁶ pulses of excimer laser beams having an energy of 10 mJ per pulse within a period in which the concentration of hydrogen molecules remaining in said silica glass article is not lower than 1 x 10¹⁶ molecules/cm³,
   wherein said processed silica glass article causes substantially no increase in its light absorption in an ultraviolet region.
10) The silica glass article according to the above-mentioned item 9), wherein the process for processing said starting silica glass article further comprises, after said step (3),
   (4) reducing the concentration of the hydrogen molecules remaining in said silica glass article to lower than 1 x 10¹⁶ molecules/cm³ by allowing to stand in the atmosphere or by heating at a temperature of not higher than 80°C.
11) An optical fiber comprising a core and a clad having a refractive index lower than the refractive index of said core, wherein said optical fiber is processed by a process comprising:
   (1) placing an optical fiber in an atmosphere containing hydrogen molecules to introduce hydrogen molecules into said optical fiber at a concentration of not lower than 1 x 10¹⁶ molecules/cm³ ;
   (2) taking said optical fiber out of the atmosphere containing hydrogen molecules; and
   (3) irradiating said optical fiber with at least 10⁶ pulses of excimer laser beams having an energy of 10 mJ per pulse within a period in which the concentration of hydrogen molecules remaining in said optical fiber is not lower than 1 x 10¹⁶ molecules/cm³,
      wherein said processed optical fiber has the characteristic that when 10⁸ pulses of excimer laser beams having a wavelength of 248 nm are applied to said processed optical fiber of one meter length, as ultraviolet ray irradiation for an evaluation of ultraviolet ray resistance, at an output of 10 mJ/cm²/pulse, the processed optical fiber after irradiation has an ultraviolet ray transmission of not less than 90% of the initial ultraviolet ray transmission.
12) The optical fiber according to the above-mentioned item 11), wherein the process for processing said optical fiber further comprises, after said step (3),
   (4) reducing the concentration of the hydrogen molecules remaining in said optical fiber to lower than 1 x 10¹⁶ molecules/cm³ by allowing to stand in the atmosphere or by heating at a temperature of not higher than 80°C,
   wherein said processed optical fiber has the characteristic that when 10⁸ pulses of KrF excimer laser beams having a wavelength of 248 nm are applied to said processed optical fiber of one meter length, as ultraviolet ray irradiation for an evaluation of ultraviolet ray resistance, at an output of 10 mJ/cm²/pulse, the processed optical fiber after irradiation has an ultraviolet ray transmission of not less than 90% of the initial ultraviolet ray transmission.
13) The optical fiber according to the above-mentioned item 11) or 12), wherein said core of the optical fiber comprises high-purity silica glass containing fluorine.
14) The optical fiber according to any one of the above-mentioned items 11) to 13), wherein said core of the optical fiber does not contain more than 1 ppm of Cl.
15) The optical fiber according to any one of the above-mentioned items 11) to 14), wherein said optical fiber is a bundle fiber formed by binding a plurality of glass fibers.

### BRIEF DESCRIPTION OF THE DRAWINGS

Fig. 1 is a diagram schematically showing the step (3) according to the present invention.

Fig. 2 is a schematic cross sectional view showing the mono-core optical fiber used in Examples according to the present invention.

Fig. 3 is a schematic view showing the structure of the bundle fiber used in Examples according to the present invention.

Fig. 4 is a diagram schematically showing the step of deuterium lamp irradiation according to Comparative Example 1 of the present invention.

Fig. 5 is a diagram showing example of bond defects in glass.

Fig. 6(a) is a graph showing changes in the concentration of hydrogen with time at the center of an optical fiber having a diameter of 125 µm upon doping the optical fiber with hydrogen at various temperatures.

Fig. 6(b) is a graph showing changes in the concentration of hydrogen with time at the center of an optical fiber having a diameter of 125 µm in the stage where hydrogen is discharged from the optical fiber at various temperatures.

Fig. 7(a) is a graph showing changes in the concentration of hydrogen with time at the center of an optical fiber having a diameter of 200 µm upon doping the optical fiber with hydrogen at various temperatures.

Fig. 7(b) is a graph showing changes in the concentration of hydrogen with time at the center of an optical fiber having a diameter of 200 µm in the stage where hydrogen is discharged from the optical fiber at various temperatures.

### DETAILED DESCRIPTION OF THE INVENTION

In the present invention, a starting silica glass article (hereinafter an "silica glass article" is sometimes abbreviated as "glass") is placed in an atmosphere containing hydrogen, and then processed with hydrogen in such a manner that the concentration of hydrogen molecules present in the glass becomes not lower than 1 x 10¹⁶ molecules/cm³ (the step (1)). Then, the glass is took out of the hydrogen atmosphere (the step (2)). Then, the step (3) is performed where the silica glass article is irradiated with an excimer laser beam having a specific energy quantity within a period in which the concentration of hydrogen molecules remaining in the glass is not lower than 1 x 10¹⁶ molecules/cm³. Carrying out the foregoing process, the silica glass article can be made into one which does not undergo deterioration any longer under a subsequent ultraviolet ray-irradiating environment.

Also, a process further having a step (4), after the step (3), of removing hydrogen molecules in the glass, for example, by heating is included within the scope of the present invention.

According to the present invention, the step (1) causes moderate bonds to be formed between the glass and hydrogen. The bonds make it possible that the ultraviolet ray resistance of the silica glass article is somewhat maintained after excessive hydrogen has been removed. However, if the silica glass article is allowed to stand for a long time after the step (1), desorption of hydrogen forming the relatively moderate bond takes place. Thus, the ultraviolet ray resistance deteriorates. To solve this problem, the irradiation with excimer laser beam in a proper quantity is performed within a period in which the concentration of hydrogen molecules present in the glass is not lower than 1 x 10¹⁶ molecules/cm³. By the irradiation, removal of hydrogen can be prevented, and a glass article which is free from deterioration under the subsequent ultraviolet ray-irradiating environment can be obtained.

The method of the present invention is described in detail below. In the present invention, the ultraviolet ray and the ultraviolet region represent an electromagnetic wave having a wavelength of 160 nm to 300 nm and its wavelength region.

The starting silica glass article for use in the present invention includes all of silica glass products which are optical elements, such as optical fibers, lenses, beam splitters and the like, made of silica glass required to industrially used ultraviolet rays. The process of manufacturing a silica glass material per se for the starting silica glass article is not particularly limited.

Moreover, the process of the present invention does not require the treatments proposed by the inventors of the present invention in EP 0 879 799 A in which the silica glass article is irradiated beforehand with an ultraviolet ray to convert defective precursors in the glass into defects.

Specifically, it is preferred that the material mainly comprises silica (SiO₂) and contains fluorine (F) in an amount of about 1 wt% especially in the region through which the ultraviolet ray is transmitted.

In addition, it is particularly preferred that the amount of Cl in the core of the optical fiber or the like is not higher than 1 ppm (i.e., the case where the Cl content is 0 ppm is included). On the other hand, the material for a region of the optical fiber through which ultraviolet rays do not pass, such as the clad is free from the above-mentioned limitation.

The constitution of the refractive index distribution of the optical fiber according to the present invention is not particularly limited. The structure may be any one of a mono-core structure, a multi-core structure, a single-mode structure and a multi-mode structure. Moreover, a bundle fiber formed by bundling a plurality of optical fibers is also included in the scope of the present invention. The bundle fiber may be formed in such a manner that the process of the present invention is applied to each of optical fibers and then the optical fibers are wound. Alternatively, a bundle fiber may be first formed by bundling a plurality of optical fibers, and then the process of the present invention is applied to the bundle fiber.

In the step (1), a hydrogen treatment is performed in which the starting silica glass article is placed in an atmosphere containing hydrogen molecules to incorporate hydrogen molecules into the glass. The "atmosphere containing hydrogen molecules" referred to in the present invention is an atmosphere of a pure hydrogen gas or a mixed atmosphere of a hydrogen gas and a nitrogen gas and/or an inert gas in which the partial pressure of the hydrogen gas is generally from 0.1 atm to 10 atm, preferably from 0.5 atm to 10 atm. The reason why the pressure is determined as described above is as follows. If the pressure is 0.5 atm to 10 atm, substantially similar dispersion speed of hydrogen in the glass can be obtained. Moreover, the glass pressure within the above range can be easily handled upon an actual production process. If the pressure exceeds 10 atm, the gas must be treated as a highpressure gas, which is strictly regulated by laws and thus is disadvantageous in an economical viewpoint. Although a similar effect can be obtained even if the pressure is about 0.1 atm, a gas of such a pressure cannot be easily handled practically.

Even if a deuterium gas is employed as the hydrogen gas, a similar effect can be obtained.

The temperature at which the hydrogen treatment is performed is not limited. When the silica glass article is a glass fiber, hydrogen at a pressure of 1 atm requires about seven days to reach the center of the fiber at room temperature, one day at 80°C and about two hours at 200°C. Therefore, a temperature of not lower than room temperature may be used. In case of a coated optical fiber, the upper limit of the treating temperature is substantially determined depending on the heat resistance of a coating for the fiber. In such a case, the treating temperature is preferably from about 80°C to about 200°C. 80°C is close to the uppermost heat-resisting temperature of the ultraviolet ray-curing type acrylate resins, and 200°C is the uppermost heat-resisting temperature of silicone resins. The hydrogen treating time varies depending on the hydrogen treating temperature. However, if the temperature is not lower than 80°C, hydrogen can be dispersed in the fiber within about two or three days to complete the treatment.

After the step (1) has been completed, the silica glass article is taken out of the atmosphere containing hydrogen molecules (the step (2)). Within a period in which the concentration of hydrogen molecules remaining in the glass is not lower than 1 x 10¹⁶ molecules/cm³, the step (3) of irradiating with an excimer laser is performed. When the step (3) is performed, the remaining hydrogen molecule concentration is preferably 1 x 10¹⁶ molecules/cm³ to 1 x 10²⁰ molecules/cm³, more preferably 1 x 10¹⁸ molecules/cm³ to 1 x 10²⁰ molecules/cm³.

As for the excimer laser beam for use in the step (3), at least 10⁶ pulses of the excimer laser beam having an energy of 10 mJ per pulse is employed to irradiate the hydrogen-introduced silica glass article.

Examples of a suitable excimer laser beam for use in this step include a KrF or ArF excimer laser beam, and particularly preferred examples thereof include KrF excimer laser beams having a wavelength of 248 nm.

More specifically, examples of the irradiation conditions include the following conditions. For example, a KrF excimer laser beam having an irradiation energy of 1 mJ/cm²/pulse to 200 mJ/cm²/pulse is applied with 10⁶ pulses to 10⁷ pulses (about 2 to 3 hours in terms of period of time). In case of an ArF excimer laser beam, those having an irradiation energy of from 1 mJ/cm²/pulse to 200 mJ/cm²/pulse are applied with 10⁴ pulses to 10⁷ pulses. The pulse frequency is, for example, about 50 Hz to about 1000 Hz. The present invention is not limited to the foregoing values, and practical values may be selected within practically permitted ranges.

Although the mechanism of the step (3) has not been clarified, the inventors of the present invention consider that irradiation with excimer laser beam in the presence of hydrogen at a concentration of not lower than 1 x 10⁶ molecules/cm³ forcibly converts precursors of defects in the glass into defects, and forms further stable bonds between hydrogen and the defect. That is, a state is brought to a fixed state so that removal of hydrogen is prevented. Particularly, although the process of the present invention does not employ a pretreatment in which the glass is irradiated with electromagnetic waves to convert the precursors into defects prior to performing the hydrogen treatment, similar effects to the case where the pretreatment is performed can be obtained by irradiating excimer laser with suitable energy conditions. Thus, the present invention improve the productivity.

The reason why hydrogen can be fixed by performing irradiation with excimer laser beam over a short period of time which is two to three hours is considered that strong pulses can instantaneously and concentrically be applied to the end surface of the fiber and thus the energy can be efficiently used to fix hydrogen. The fixation of hydrogen in the step (3) is advantageous for a silica glass article having a small size, particularly, an optical fiber.

The silica glass article having been subjected to the foregoing three steps of the present invention has a feature that it causes substantially no increase in its light absorption in the ultraviolet ray region, if irradiated with ultraviolet rays. For example, in a case where 10⁸ pulses of KrF excimer laser having a wavelength of 248 nm are applied to an optical fiber of one meter length at an output of 10 mJ/cm², as a ultraviolet ray irradiation for an evaluation of ultraviolet resistance, the thus irradiated optical fiber has a transmission of not less than 90% of the transmission prior to the irradiation.

The expression "causing substantially no increase in light absorption in the ultraviolet region due to ultraviolet region irradiation" used herein specifically means that deterioration in the transmission occurring due to ultraviolet ray irradiation is not higher than 10% of the initial transmission. That is, assuming that the initial ultraviolet ray transmission (the initial transmission) is T₀, the ultraviolet ray transmission after irradiated with the ultraviolet ray (160 nm to 300 nm) is T₁ and the relative transmission after irradiation, with regarding T₀ as 100%, is T_{R} (T_{R} = T₁/T₀ x 100 (%)), a relationship 100 - T_{R} ≤ 10%, that is, ((T₀ - T₁)/T₀) ≤ 10% is satisfied. In other words, the ultraviolet ray transmission after the irradiation is not lower than 90% of the initial transmission.

After hydrogen has been fixed by performing irradiation with the excimer laser beam in the step (3), there may be a case where unfixed hydrogen molecules still remain in the glass. Although the existence of such unfixed hydrogen molecules does not raise any problem when the glass is used in a short wavelength region, it causes a problem when used in a long wavelength region in which absorption by hydrogen molecules take place. This is because hydrogen molecules (H₂) have absorption at 1.24 µm and the intensity of the absorption is 3.4 dB/km at 1 x 10¹⁸ molecules/cm³ and 0.03 dB/km at 1 x 10¹⁶ molecules/cm³.

To remove the unfixed hydrogen molecules in the glass, there may be employed a heating treatment as the step (4). It is preferred that the heating is performed at a temperature of, for example, from room temperature to 80°, so as to make the concentration of hydrogen molecules remaining in the silica glass article after the step (4) to be 1 x 10¹⁶ molecules/cm³ or lower. The unfixed hydrogen can also be removed by merely allowing the silica glass article to stand in the atmosphere.

By carrying out the step (4), change in the refractive index with time can be prevented, and constant luminance can always be obtained. Since light absorption owing to hydrogen molecules per se can be eliminated, it is also possible to use a near infrared ray as the transmission light.

The value of hydrogen concentration in the glass can be obtained by Raman analysis disclosed in Zurnal Pril; adnoi Spektroskopii Vol. 46 No. 6 pp. 987-991 June 1987 (document 8) in accordance with the equation about the intensity ratio of the intensity of a Raman band of SiO₂ at 800 cm⁻¹ and that of hydrogen molecules in the synthesis silica glass at 4135 cm⁻¹.

A silica glass article after subjected to the step (4) of the present invention causes substantially no increase in its light absorption in the ultraviolet ray region, if irradiated with ultraviolet rays. For example, in the case where an optical fiber having a length of 1 m is irradiated with 10⁸ pulses of KrF excimer laser having a wavelength of 248 nm under the conditions that the output is 10 mJ/cm² and the pulse frequency is 100 Hz, the silica glass article exhibits a difference between the initial ultraviolet ray transmission and the ultraviolet ray transmission after irradiated with ultraviolet rays is not higher than 10% of the initial transmission at a wavelength of 248 nm.

When the silica glass article according to the present invention is an optical fiber, thermosetting silicones or ultraviolet ray-curing urethane acrylates can be used as a primary coating, and nylons can be used as a secondary coating.

The present invention will be described in greater detail with reference to the following Examples, but the invention should not be construed as being limited thereto.

For the confirmation of the effect of the present invention, the following Examples and Comparative Examples were conducted. Irradiation conditions in the ultraviolet ray resistance tests performed to evaluate each optical fiber according to Examples and Comparative Examples were such that 10⁸ pulses of a KrF excimer laser having a wavelength 248 nm and 10 mJ/cm²/pulse were applied to both ends of the optical fiber.

### EXAMPLE 1

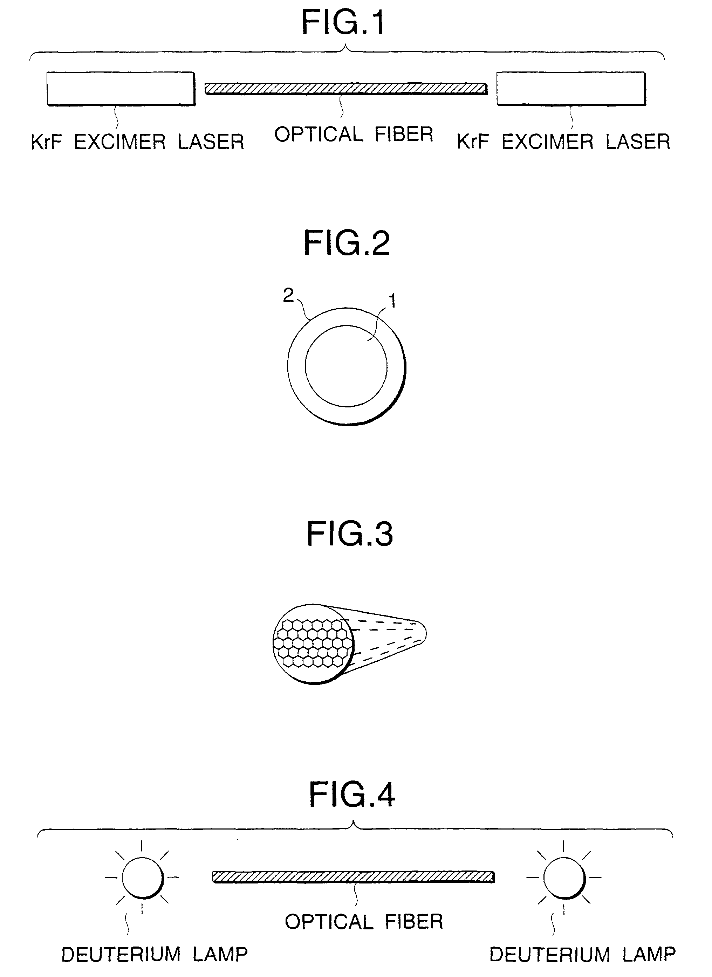

As shown in Fig. 2, a mono-core optical fiber of 1,000 meter length composed of silica glass core 1 containing Cl in an amount lower than 1 ppm and fluorine (F) in an amount of 1 wt%, and silica glass clad 2 containing F in an amount of 3 wt% was immersed in a hydrogen atmosphere, the pressure of which was 10 atm, at 80°C for one week (the step (1)), taken out from the hydrogen atmosphere (the step (2)), and then the optical fiber was cut to a length of 1 m and irradiated from both ends thereof with a KrF excimer laser having a wavelength of 248 nm as shown in Fig. 1 (the step (3)). At this time, the concentration of hydrogen molecules in the optical fiber was 7 x 10¹⁹ molecules/cm³ and the irradiation conditions were such that 10⁷ pulses of a KrF excimer laser having 10 mJ/cm²/pulse was applied.

The ultraviolet ray resistance test was performed immediately after the step (3) in such a manner that the thus-obtained optical fiber having a length of 1 m was irradiated with 10⁸ pulses of a KrF excimer laser. The transmission at a wavelength of 248 nm after irradiation was merely deteriorated to about 96% of the transmission at initial stage (the transmission immediately after the step (3) of the present invention and before the ultraviolet ray resistance test). The optical fiber showed sufficient ultraviolet ray resistance characteristics.

### EXAMPLE 2

A mono-core optical fiber of one meter length composed of silica glass core containing Cl in an amount lower than 1 ppm and fluorine (F) in an amount of 1 wt%, and silica glass clad containing fluorine (F) in an amount of 3 wt% was allowed to stand in a hydrogen atmosphere, the pressure of which was 10 atm, at 80°C for one week, taken out from the hydrogen atmosphere, and irradiated from both ends thereof with a KrF excimer laser having a wavelength of 248 nm as shown in Fig. 1. At this time, the concentration of hydrogen molecules in the optical fiber was 1 x 10¹⁹ molecules/cm³ and the irradiation conditions were such that 10⁷ pulses of a KrF excimer laser having 10 mJ/cm²/pulse was applied. The thus-obtained optical fiber was allowed to stand in an atmosphere at 40°C for three weeks so that removal of hydrogen was performed (the step (4)). As a result, the concentration of hydrogen molecules in the optical fiber became less than 1 x 10¹⁶ molecules/cm³.

The thus-obtained optical fiber according to the present invention (1 m length) was subjected to the ultraviolet ray resistance test in the same manner as in Example 1. As a result, the deterioration in transmission at a wavelength of 248 nm was merely such that the transmittance after the irradiation for testing was about 93% of the transmission at initial stage (the transmission immediately after the step (4) of the present invention and before the irradiation for testing). The optical fiber exhibited sufficient ultraviolet ray resistance characteristics. As a result of the hydrogen removal treatment, an optical fiber having no change in refractive index with the lapse of time could be obtained.

### EXAMPLE 3

The same mono-core optical fibers used in Example 2 were bundled to form a bundle fiber (1 m length) as shown in Fig. 3. The thus-obtained bundle fiber (1 m length) was subjected to the ultraviolet ray resistance test and evaluated in the same manner as described above. The same advantageous result that the transmission at a wavelength of 248 nm after irradiation was merely deteriorated to about 96% of the transmission at initial stage could be obtained.

### EXAMPLE 4

An optical fiber according to the present invention was obtained according to the same procedure as in Example 1, except that the irradiation with a KrF excimer laser was performed only from one side of the optical fiber.

The thus obtained optical fiber (1 m length) was subjected to the ultraviolet ray resistance test and evaluated in the same manner as in Example 1. The transmittance at a wavelength of 248 nm after irradiation was merely deteriorated to about 93% of the transmission at initial stage, which was the same advantageous result as in Example 1.

### COMPARATIVE EXAMPLE 1

A mono-core optical fiber (1,000 meter length) composed of silica glass core containing Cl in an amount lower than 1 ppm and fluorine (F) in an amount of 1 wt%, and silica glass clad containing F in an amount of 3 wt% was allowed to stand in a hydrogen atmosphere at 80°C for one week, the pressure of which was 10 atm, taken out from the hydrogen atmosphere, and then the optical fiber was cut to a length of 1 m and irradiated by a deuterium lamp from both ends thereof for 24 hours as shown in Fig. 4. At this time, the concentration of hydrogen molecules in the optical fiber was 7 × 10¹⁹ molecules/cm³. The irradiation conditions were such that the output from the lamp was 150 W and the distance from the lamp to the fiber was 15 cm. The irradiation was conducted from both ends of the optical fiber.

The thus-obtained optical fiber for comparison (1 m length) was subjected to the ultraviolet ray resistance test in the same manner as in Example 1. As a result, the transmission at a wavelength of 248 nm was remarkably deteriorated such that the transmission after the irradiation for testing was about 30% of the transmission at initial stage (the transmission immediately after the step (3) and before the ultraviolet ray resistance test).

### COMPARATIVE EXAMPLE 2

A mono-core optical fiber of one meter length composed of silica glass core containing Cl in an amount lower than 1 ppm and fluorine (F) in an amount of 1 wt%, and silica glass clad containing F in an amount of 3 wt% was allowed to stand in a hydrogen atmosphere at 80°C for one week, the pressure of which was 10 atm, taken out from the hydrogen atmosphere, and then irradiated from both ends thereof with a KrF excimer laser having a wavelength of 248 nm as shown in Fig. 1. At this time, the concentration of hydrogen molecules in the optical fiber was 1 × 10¹⁹ molecules/cm³ and the irradiation conditions were such that 10⁵ pulses of a KrF excimer laser having 10 mJ/cm²/pulse was applied. The optical fiber obtained was allowed to stand in an atmosphere at 40°C for three weeks so that removal of hydrogen was performed. As a result, the concentration of hydrogen molecules in the optical fiber became less than 1 × 10¹⁶ molecules/cm³.

The thus-obtained optical fiber for comparison (1 m length) was subjected to the ultraviolet ray resistance test in the same manner as in Example 1. As a result, the transmission at a wavelength of 248 nm was remarkably deteriorated such that the transmission after the irradiation for testing was about 30% of the transmission at initial stage (the transmission immediately after the step (4) and before the ultraviolet ray resistance test).

As explained above, the starting material silica glass article is subjected to the step in which hydrogen molecules are introduced into the silica glass article, and subjected to the step in which the silica glass article is irradiated with an excimer laser having a wavelength of 248 nm at an appropriate quantity while the hydrogen molecules remaining in the optical fiber is not lower than 1 × 10¹⁶ molecules/cm³ to thereby forcibly convert defect precursors in the glass to defects to form a stable bonding between the defects and the hydrogen molecules. Thus, hydrogen can be fixed. The substantial increase in the light absorption in the ultraviolet ray region having a wavelength of from 160 nm to 300 nm, occurring due to ultraviolet ray irradiation, is prevented. In particular, due to the fixation of hydrogen, an article, such as the optical fiber, having a small diameter with respect to the diffusion rate of hydrogen is enabled to maintain ultraviolet ray resistance for a long period of time. In addition, preliminary irradiation of electromagnetic waves is not required for converting precursors to defects and the conversion and the hydrogen fixation can be performed concurrently, which results in the improvement of productivity.

Further, by the addition of the step of removing hydrogen, surplus hydrogen not fixed in the glass can be removed. Thus, light absorption by the hydrogen molecules can be reduced, the characteristics of the article can be stabilized, fluctuation in refractive index with the lapse of time can be prevented and constant luminance can be obtained, and the use of a light in near infrared region becomes feasible because the absorption of the light by the hydrogen molecules does not occur.

Conventional fibers for use in the ultraviolet region are easily liable to be deteriorated due to ultraviolet irradiation and therefore are hardly applied to practical use. According to the process of the present invention, fibers can be used accompanied with no problems in the wavelength region of from 300 to 200 nm, further, even in a vacuum ultraviolet ray region without vacuuming.

Moreover, an advantage can be obtained in that the silica glass article has excellent light transmission in the vacuum ultraviolet ray region as compared in the atmosphere. Since the silica glass article has flexibility, the silica glass article according to the present invention can significantly advantageously be employed in an apparatus using an ultraviolet ray source, such as excimer laser beams, a deuterium lamp or a halogen lamp, in particular, as a light transmission medium for a machining apparatus, such as a laser machining apparatus or a photolithography apparatus, and a light transmission medium for a fiber hardening ray source, an adhesion curing ray source, a variety of microelement machining apparatuses or an SR (synchrotron radiation) light generating source.

While the invention has been described in detail and with reference to specific examples thereof, it will be apparent to one skilled in the art that various changes and modifications can be made therein without departing from the spirit and scope thereof.

## Claims

1. A method of manufacturing a silica glass article comprising:
(1) placing a starting silica glass article in an atmosphere containing hydrogen molecules to introduce hydrogen molecules into said starting silica glass article at a concentration of not lower than 1 x 10¹⁶ molecules/cm³;
(2) taking said hydrogen-introduced silica glass article out of the atmosphere containing hydrogen molecules; and
(3) irradiating said silica glass article with at least 10⁶ pulses of an excimer laser beam having an energy of 10 mJ per pulse within a period in which the concentration of hydrogen molecules remaining in said silica glass article is not lower than 1 x 10¹⁶ molecules/cm³, to obtain a processed silica glass article which causes substantially no increase in its light absorption in an ultraviolet region.

2. The method of manufacturing a silica glass article according to claim 1, wherein said step (1) is performed under conditions that the partial pressure of hydrogen is 0.5 atm to 10 atm and the temperature is not lower than the room temperature.

3. The method of manufacturing a silica glass article according to claim 1 or 2, wherein the excimer laser beam has a wavelength of 248 nm, an energy of 100 mJ per pulse and a number of the pulses of not more than 10⁷.

4. The method of manufacturing a silica glass article according to any one of claims 1 to 3, further comprising, after said step (3),
(4) reducing the concentration of the hydrogen molecules remaining in said silica glass article to lower than 1 x 10¹⁶ molecules/cm³.

5. The method of manufacturing a silica glass article according to claim 4, wherein said step (4) is performed by heating said silica glass article at a temperature of from room temperature to 80°C.

6. The method of manufacturing a silica glass article according to any one of claims 1 to 5,
wherein said starting silica glass article is an optical fiber having a coating, and
wherein said step (1) is performed under the partial pressure of hydrogen of from 0.5 atm to 10 atm and at a temperature of from room temperature to an uppermost heat-resisting temperature of the coating of said optical fiber.

7. The method of manufacturing a silica glass article according to any one of claims 1 to 6,
wherein said starting silica glass article is an optical fiber, and
wherein said step (1) is performed under the partial pressure of hydrogen of 0.5 atm to 10 atm and at a temperature of from 80°C to 200°C.

8. The method of manufacturing a silica glass article according to any one of claims 1 to 7, wherein said starting silica glass article is a bundle fiber formed by bundling a plurality of optical fibers or is an optical fiber for constituting a bundle fiber.

9. A silica glass article which is processed by a process comprising:
(1) placing a starting silica glass article in an atmosphere containing hydrogen molecules to introduce hydrogen molecules into said starting silica glass article at a concentration of not lower than 1 x 10¹⁶ molecules/cm³;
(2) taking said hydrogen-introduced silica glass article out of the atmosphere containing hydrogen molecules; and
(3) irradiating said silica glass article with at least 10⁶ pulses of an excimer laser beam having an energy of 10 mJ per pulse within a period in which the concentration of hydrogen molecules remaining in said silica glass article is not lower than 1 x 10¹⁶ molecules/cm³,
wherein said processed silica glass article causes substantially no increase in its light absorption in an ultraviolet region.

10. The silica glass article according to claim 9, wherein the process for processing said starting silica glass article further comprises, after said step (3),
(4) reducing the concentration of the hydrogen molecules remaining in said silica glass article to lower than 1 x 10¹⁶ molecules/cm³ by allowing to stand in the atmosphere or by heating at a temperature of not higher than 80°C.

11. An optical fiber comprising a core and a clad having a refractive index lower than the refractive index of said core, wherein said optical fiber is processed by a process comprising:
(1) placing an optical fiber in an atmosphere containing hydrogen molecules to introduce hydrogen molecules into said optical fiber at a concentration of not lower than 1 x 10¹⁶ molecules/cm³;
(2) taking said optical fiber out of the atmosphere containing hydrogen molecules; and
(3) irradiating said optical fiber with at least 10⁶ pulses of an excimer laser beam having an energy of 10 mJ per pulse within a period in which the concentration of hydrogen molecules remaining in said optical fiber is not lower than 1 x 10¹⁶ molecules/cm³,
wherein said processed optical fiber has the characteristic that when 10⁸ pulses of an excimer laser beam having a wavelength of 248 nm are applied to said processed optical fiber of one meter length, as ultraviolet ray irradiation for an evaluation of ultraviolet ray resistance, at an output of 10 mJ/cm²/pulse, the processed optical fiber after irradiation has an ultraviolet ray transmission of not less than 90% of the initial ultraviolet ray transmission.

12. The optical fiber according to claim 11, wherein the process for processing said optical fiber further comprises, after said step (3),
(4) reducing the concentration of the hydrogen molecules remaining in said optical fiber to lower than 1 x 10¹⁶ molecules/cm³ by allowing to stand in the atmosphere or by heating at a temperature of not higher than 80°C,
wherein said processed optical fiber has the characteristic that when 10⁸ pulses of a KrF excimer laser beam having a wavelength of 248 nm are applied to said processed optical fiber of one meter length, as ultraviolet ray irradiation for an evaluation of ultraviolet ray resistance, at an output of 10 mJ/cm²/pulse, the processed optical fiber after irradiation has an ultraviolet ray transmission of not less than 90% of the initial ultraviolet ray transmission.

13. The optical fiber according to claim 11 or 12, wherein said core of the optical fiber comprises high-purity silica glass containing fluorine.

14. The optical fiber according to any one of claims 11 to 13, wherein said core of the optical fiber does not contain more than 1 ppm of Cl.

15. The optical fiber according to any one of claims 11 to 14, wherein said optical fiber is a bundle fiber formed by binding a plurality of glass fibers.

## Patentansprüche

1. Verfahren zur Herstellung eines Quarzglas-Gegenstandes, das umfasst:
(1) das Anordnen eines Ausgangs-Quarzglas-Gegenstandes in einer Wasserstoffmoleküle enthaltenden Atmosphäre, um Wasserstoffmoleküle in den genannten Ausgangs-Quarzglas-Gegenstand in einer Konzentration von nicht weniger als 1 x 10¹⁶ Molekülen/cm³ einzuführen;
(2) das Herausnehmen des genannten Quarzglas-Gegenstandes mit in diesen eingeführtem Wasserstoff aus der Wasserstoffmoleküle enthaltenden Atmosphäre; und
(3) das Bestrahlen des genannten Quarzglas-Gegenstandes mit mindestens 10⁶ Impulsen eines Excimer-Laserstrahls, der eine Energie von 10 mJ pro Impuls hat, innerhalb eines Zeitraums, in dem die Konzentration der Wasserstoffmoleküle, die in dem genannten Quarzglas-Gegenstand verbleiben, nicht weniger als 1 x 10¹⁶ Moleküle/cm³ beträgt, wobei man einen behandelten Quarzglas-Gegenstand erhält, der im wesentlichen keine Erhöhung seiner Lichtabsorption im ultravioletten Bereich verursacht.

2. Verfahren zur Herstellung eines Quarzglas-Gegenstandes nach Anspruch 1, bei dem die genannte Stufe (1) unter solchen Bedingungen durchgeführt wird, dass der Wasserstoff-Partialdruck 0,5 bis 10 atm beträgt und die Temperatur nicht unter Raumtemperatur liegt.

3. Verfahren zur Herstellung eines Quarzglas-Gegenstandes nach Anspruch 1 oder 2, bei dem der Excimer-Laserstrahl eine Wellenlänge von 248 nm, eine Energie von 100 mJ pro Impuls und eine Anzahl der Impulse von nicht mehr als 10⁷ aufweist.

4. Verfahren zur Herstellung eines Quarzglas-Gegenstandes nach einem der Ansprüche 1 bis 3, das außerdem nach der genannten Stufe (3) umfasst:
(4) die Herabsetzung der Konzentration der in dem genannten Quarzglas-Gegenstand verbleibenden Wasserstoffmoleküle auf weniger als 1 x 10¹⁶ Moleküle/cm³.

5. Verfahren zur Herstellung eines Quarzglas-Gegenstandes nach Anspruch 4, bei dem die genannte Stufe (4) durchgeführt wird durch Erhitzen des genannten Quarzglas-Gegenstandes auf eine Temperatur von Raumtemperatur bis 80°C.

6. Verfahren zur Herstellung eines Quarzglas-Gegenstandes nach einem der Ansprüche 1 bis 5, bei dem der genannte Ausgangs-Quarzglas-Gegenstand eine optische Faser ist, die einen Überzug aufweist, und die genannte Stufe (1) unter einem Wasserstoff-Partialdruck von 0,5 bis 10 atm und bei einer Temperatur von Raumtemperatur bis zur höchsten Wärmebeständigkeits-Temperatur des Überzugs der genannten optischen Faser durchgeführt wird.

7. Verfahren zur Herstellung eines Quarzglas-Gegenstandes nach einem der Ansprüche 1 bis 6, bei dem der genannte Ausgangs-Quarzglas-Gegenstand eine optische Faser ist und die genannte Stufe (1) unter einem Wasserstoff-Partialdruck von 0,5 bis 10 atm und bei einer Temperatur von 80 bis 200°C durchgeführt wird.

8. Verfahren zur Herstellung eines Quarzglas-Gegenstandes nach einem der Ansprüche 1 bis 7, bei dem der genannte Ausgangs-Quarzglas-Gegenstand ein Faserbündel, das durch Bündeln einer Vielzahl von optischen Fasern hergestellt wurde, oder eine optische Faser, die ein Faserbündel aufbaut, ist.

9. Quarzglas-Gegenstand, der nach einem Verfahren hergestellt worden ist, das umfasst:
(1) das Anordnen eines Ausgangs-Quarzglas-Gegenstandes in einer Wasserstoffmoleküle enthaltenden Atmosphäre, um Wasserstoffmoleküle in den genannten Ausgangs-Quarzglas-Gegenstand in einer Konzentration von nicht weniger als 1 x 10¹⁶ Molekülen/cm³ einzuführen;
(2) das Herausnehmen des genannten Quarzglas-Gegenstandes mit in diesen eingeführtem Wasserstoff aus der Wasserstoffmoleküle enthaltenden Atmosphäre; und
(3) das Bestrahlen des genannten Quarzglas-Gegenstandes mit mindestens 10⁶ Impulsen eines Excimer-Laserstrahls, der eine Energie von 10 mJ pro Impuls hat, innerhalb eines Zeitraums, in dem die Konzentration der Wasserstoffmoleküle, die in dem genannten Quarzglas-Gegenstand verbleiben, nicht weniger als 1 x 10¹⁶ Moleküle/cm³ beträgt, wobei der genannte behandelte Quarzglas-Gegenstand im wesentlichen keine Erhöhung seiner Lichtabsorption im ultravioletten Bereich verursacht.

10. Quarzglas-Gegenstand nach Anspruch 9, bei dem das Verfahren zur Behandlung des genannten Ausgangs-Quarzglas-Gegenstandes außerdem nach der genannten Stufe (3) umfasst
(4) die Herabsetzung der Konzentration der Wasserstoffmoleküle, die in dem genannten Quarzglas-Gegenstand verbleiben, auf weniger als 1 x 10¹⁶ Moleküle/cm³, indem man ihn in der Atmosphäre stehen lässt oder auf eine Temperatur von nicht höher als 80°C erhitzt.

11. Optische Faser, die einen Kern und eine Umhüllung umfasst, wobei der Brechungsindex der Umhüllung niedriger ist als der Brechungsindex des Kerns, wobei die genannte optische Faser nach einem Verfahren hergestellt worden ist, das umfasst:
(1) das Anordnen einer optischen Faser in einer Wasserstoffmoleküle enthaltenden Atmosphäre, um Wasserstoffmoleküle in die genannte optische Faser in einer Konzentration von nicht weniger als 1 x 10¹⁶ Molekülen/cm³ einzuführen;
(2) das Herausnehmen der genannten optischen Faser aus der Wasserstoffmoleküle enthaltenden Atmosphäre; und
(3) das Bestrahlen der genannten optischen Faser mit mindestens 10⁶ Impulsen eines Excimer-Laserstrahls, der eine Energie von 10 mJ pro Impuls hat, innerhalb eines Zeitraums, in dem die Konzentration der Wasserstoffmoleküle, die in der genannten optischen Faser verbleiben, nicht weniger als 1 x 10¹⁶ Moleküle/cm³ beträgt,
wobei die genannte behandelte optische Faser die Eigenschaft hat, dass dann, wenn 10⁸ Impulse eines Excimer-Laserstrahls mit einer Wellenlänge von 248 nm auf die genannte behandelte optische Faser mit einer Länge von 1 m als ultraviolette Bestrahlung zur Bewertung der Beständigkeit gegen ultraviolette Strahlung bei einer Leistung von 10 mJ/cm²/Impuls einwirken gelassen werden, die behandelte optische Faser nach der Bestrahlung eine Durchlässigkeit für ultraviolette Strahlen von nicht weniger als 90 % der anfänglichen Durchlässigkeit für ultraviolette Strahlen aufweist.

12. Optische Faser nach Anspruch 11, worin das Verfahren zum Behandeln der genannten optischen Faser nach der genannten Stufe (3) außerdem umfasst:
(4) die Herabsetzung der Konzentration der Wasserstoffmoleküle, die in der genannten optischen Faser verbleiben, auf weniger als 1 x 10¹⁶ Molekül/cm³, indem man sie in der Atmosphäre stehen lässt oder auf eine Temperatur von nicht höher als 80°C erhitzt,
wobei die genannte behandelte optische Faser die Eigenschaft hat, dass dann, wenn 10⁸ Impulse eines KrF-Excimer-Laserstrahls mit einer Wellenlänge von 248 nm auf die genannte behandelte optische Faser mit einer Länge von 1 m als ultraviolette Strahlung zur Bewertung der Beständigkeit gegen ultraviolette Strahlen bei einer Leistung von 10 mJ/cm²/Impuls einwirken gelassen werden, die behandelte optische Faser nach der Bestrahlung eine Durchlässigkeit für ultraviolette Strahlen von nicht weniger als 90 % der anfänglichen Durchlässigkeit für ultraviolette Strahlen aufweist.

13. Optische Faser nach Anspruch 11 oder 12, worin der genannte Kern der optischen Faser hochreines, Fluor enthaltendes Quarzglas umfasst.

14. Optische Faser nach einem der Ansprüche 11 bis 13, worin der genannte Kern der optischen Faser nicht mehr als 1 ppm Cl enthält.

15. Optische Faser nach einem der Ansprüche 11 bis 14, worin die genannte optische Faser ein Faserbündel ist, das durch Verbinden einer Vielzahl von Glasfasern hergestellt worden ist.

## Revendications

1. Procédé de fabrication d'un article en verre de silice comprenant :
(1) le placement d'un article en verre de silice de départ dans une atmosphère qui contient des molécules d'hydrogène afin d'introduire des molécules d'hydrogène dans ledit article en verre de silice de départ selon une concentration non inférieure à 1 x 10¹⁶ molécules/cm³ ;
(2) l'extraction dudit article en verre de silice à hydrogène introduit de l'atmosphère qui contient des molécules d'hydrogène ; et
(3) l'irradiation dudit article en verre de silice avec au moins 10⁶ impulsions d'un faisceau laser excimer présentant une énergie de 10 mJ par impulsion à l'intérieur d'une période pendant laquelle la concentration en molécules d'hydrogène subsistant dans ledit article en verre de silice n'est pas inférieure à 1 x 10¹⁶ molécules/cm³ afin d'obtenir un article en verre de silice traité qui ne provoque pas de façon substantielle une augmentation de son absorption de lumière dans la région des ultraviolets.

2. Procédé de fabrication d'un article en verre de silice selon la revendication 1, dans lequel ladite étape (1) est réalisée sous des conditions constituées par le fait que la pression partielle d'hydrogène est comprise entre 0,5 atmosphère et 10 atmosphères et la température n'est pas inférieure à la température ambiante.

3. Procédé de fabrication d'un article en verre de silice selon la revendication 1 ou 2, dans lequel le faisceau laser excimer présente une longueur d'onde de 248 nm, une énergie de 100 mJ par impulsion et un nombre d'impulsions non supérieur à 10⁷.

4. Procédé de fabrication d'un article en verre de silice selon l'une quelconque des revendications 1 à 3, comprenant en outre, après ladite étape (3) :
(4) la réduction de la concentration en molécules d'hydrogène subsistant dans ledit article en verre de silice à une valeur inférieure 1 x 10¹⁶ molécules/cm³

5. Procédé de fabrication d'un article en verre de silice selon la revendication 4, dans lequel ladite étape (4) est réalisée en chauffant ledit article en verre de silice en une température qui va de la température ambiante à 80°C.

6. Procédé de fabrication d'un article en verre de silice selon l'une quelconque des revendications 1 à 5, dans lequel :
ledit article en verre de silice de départ est une fibre optique qui comporte un revêtement ; et
ladite étape (1) est réalisée sous la pression partielle d'hydrogène comprise entre 0,5 atmosphère et 10 atmosphères et à une température qui va de la température ambiante à une température de résistance à la chaleur la plus supérieure du revêtement de ladite fibre optique.

7. Procédé de fabrication d'un article en verre de silice selon l'une quelconque des revendications 1 à 6, dans lequel :
ledit article en verre de silice de départ est une fibre optique ; et
ladite étape (1) est réalisée sous la pression partielle d'hydrogène qui va de 0,5 atmosphère à 10 atmosphères et à une température qui va de 80°C à 200°C.

8. Procédé de fabrication d'un article en verre de silice selon l'une quelconque des revendications 1 à 7, dans lequel ledit article en verre de silice de départ est un faisceau de fibres qui est formé en regroupant en faisceau une pluralité de fibres optiques ou est une fibre optique pour constituer un faisceau de fibres.

9. Article en verre de silice qui était traité au moyen d'un processus comprenant :
(1) le placement d'un article en verre de silice de départ dans une atmosphère qui contient des molécules d'hydrogène afin d'introduire des molécules d'hydrogène dans ledit article en verre de silice de départ selon une concentration non inférieure à 1 x 10¹⁶ molécules/cm³ ;
(2) l'extraction dudit article en verre de silice à hydrogène introduit de l'atmosphère qui contient des molécules d'hydrogène ; et
(3) l'irradiation dudit article en verre de silice avec au moins 10⁶ impulsions d'un faisceau laser excimer présentant une énergie de 10 mJ par impulsion à l'intérieur d'une période pendant laquelle la concentration en molécules d'hydrogène subsistant dans ledit article en verre de silice n'est pas inférieure à 1 x 10¹⁶ molécules/cm³,
dans lequel ledit article en verre de silice traité ne provoque pas de façon substantielle une augmentation de son absorption de lumière dans la région des ultraviolets.

10. Article en verre de silice selon la revendication 9, dans lequel le processus pour traiter ledit article en verre de silice de départ comprend en outre, après ladite étape (3) :
(4) la réduction de la concentration en molécules d'hydrogène subsistant dans ledit article en verre de silice à une valeur inférieure 1 x 10¹⁶ molécules/cm³ par maintien dans l'atmosphère ou par chauffage à une température non supérieure à 80°C.

11. Fibre optique comprenant une âme et un gainage présentant un indice de réfraction inférieur à l'indice de réfraction de ladite âme, dans lequel ladite fibre est traitée au moyen d'un processus comprenant :
(1) le placement d'un article en verre de silice de départ dans une atmosphère qui contient des molécules d'hydrogène afin d'introduire des molécules d'hydrogène dans ledit article en verre de silice de départ selon une concentration non inférieure à 1 x 10¹⁶ molécules/cm³ ;
(2) l'extraction dudit article en verre de silice à hydrogène introduit de l'atmosphère qui contient des molécules d'hydrogène ; et
(3) l'irradiation dudit article en verre de silice avec au moins 10⁶ impulsions d'un faisceau laser excimer présentant une énergie de 10 mJ par impulsion à l'intérieur d'une période pendant laquelle la concentration en molécules d'hydrogène subsistant dans ledit article en verre de silice n'est pas inférieure à 1 x 10¹⁶ molécules/cm³,
dans lequel ladite fibre optique traitée présente la caractéristique selon laquelle, lorsque 10⁸ impulsions d'un faisceau laser excimer présentant une longueur d'ondes de 248 nm sont appliquées sur ladite fibre optique traitée d'une longueur d'un mètre, en tant qu'irradiation de rayons ultraviolets pour une évaluation d'une résistance aux rayons ultraviolets, à une sortie d'impulsion de 10 mJ/cm², la fibre optique traitée après irradiation présente une transmission de rayonnement ultraviolet non inférieurs à 90% de la transmission de rayonnement ultraviolets initiale.

12. Fibre optique selon la revendication 11, dans laquelle le processus pour traiter ladite fibre optique comprend en outre, après ladite étape (3) :
(4) la réduction de la concentration en molécules d'hydrogène subsistant dans ledit article en verre de silice à une valeur inférieure 1 x 10¹⁶ molécules/cm³ par maintien dans l'atmosphère ou par chauffage à une température non supérieure à 80°C,
dans lequel ladite fibre optique traitée présente la caractéristique selon laquelle, lorsque 10⁸ impulsions d'un faisceau laser excimer présentant une longueur d'ondes de 248 nm sont appliquées sur ladite fibre optique traitée d'une longueur d'un mètre, en tant qu'irradiation de rayons ultraviolets pour une évaluation d'une résistance aux rayons ultraviolets, à une sortie d'impulsion de 10 mJ/cm², la fibre optique traitée après irradiation présente une transmission de rayonnement ultraviolet non inférieurs à 90% de la transmission de rayonnement ultraviolets initiale.

13. Fibre optique selon la revendication 11 ou 12, dans laquelle ladite âme de la fibre optique comprend un verre de silice haute pureté contenant du fluor.

14. Fibre optique selon l'une quelconque des revendications 11 à 13, dans laquelle ladite âme de la fibre optique ne contient pas plus de 1 ppm (partie par million) de Cl.

15. Fibre optique selon l'une quelconque des revendications 11 à 14, dans laquelle ladite fibre optique est une fibre en faisceau qui est formée en groupant en faisceau une pluralité de fibres de verre.
